# EUROPÄISCHE PATENTSCHRIFT

(11) **EP 1 112 970 B1**
(45) Veröffentlichungstag und Bekanntmachung des Hinweises auf die Patenterteilung: **23.07.2003**
(21) Anmeldenummer: 00125750.0
(22) Anmeldetag: 24.11.2000
(51) Int. Cl.: C02F 11/10

(54) **Verfahren und Anlage zur Gewinnung von brennbarem Gas aus insbesondere Klärschlamm**
Process and device for the production of combustible gas out of sewage sludge
Procédé et dispositif pour obtenir un gaz combustible issu de boues d'épuration

(30) Priorität: 20.12.1999 DE 19961437
(43) Veröffentlichungstag der Anmeldung: 04.07.2001
(73) Patentinhaber: Kopf AG, 72172 Sulz-Bergfelden (DE)
(72) Erfinder: Burgbacher, Christian, 72172 Sulz am Neckar (DE); Molitor, Jochen, 78730 Lauterbach (DE)
(74) Vertreter: Späth, Dieter, Dipl.-Ing.

(56) Entgegenhaltungen:
- DE-A- 2 747 424
- DE-A- 3 423 620
- DE-A- 19 527 205
- US-A- 4 758 248

## Beschreibung

Die Erfindung betrifft ein Verfahren und eine Anlage zur Gewinnung von brennbarem Gas aus insbesondere Klärschlamm mit den Merkmalen der Oberbegriffe der Ansprüche 1 und 6.

Die Vergasung von Klärschlamm an sich ist bekannt. Der Klärschlamm wird vorzugsweise getrocknet in einen Vergaser eingebracht und dort durch Erhitzung thermisch zersetzt, man erhält ein brennbares Gas oder Gasgemisch. Das gewonnene Gas kann zur Strom- und/oder Wärmeerzeugung verwendet werden. Dabei tritt jedoch das Problem auf, dass in dem gewonnenen Gas Schadstoffe, insbesondere Teer enthalten ist. Der Teer hat die Eigenschaft, dass er bei Abkühlung kondensiert, sich in dem Vergaser nachgeschalteten Leitungen und Anlagen niederschlägt und diese innerhalb kurzer Zeit funktionsunfähig macht. Soll mit dem im Vergaser gewonnenen Gas beispielsweise ein Gasmotor betrieben werden, setzt der im Gas enthaltene Teer eine Einspritzanlage oder einen Vergaser des Gasmotors innerhalb kurzer Zeit zu, so dass die Einspritzanlage oder der Vergaser des Gasmotors gereinigt werden müssen, bevor der Gasmotor wiederum nur für kurze Zeit betrieben werden kann. Ein dem Gasmotor vorgeschaltetes Filter würde sich innerhalb kurzer Zeit ebenfalls mit Teer zusetzen, weswegen eine Filterung des gewonnenen Gases nicht möglich ist. Es ist versucht worden, den Teer aus dem gewonnenen Gas abzuscheiden. Dabei tritt jedoch das Problem auf, dass sich der Teer im Abscheider ebenfalls niederschlägt und dessen Funktion zumindest beeinträchtigt. Hinzu kommt das Problem, dass der abgeschiedene Teer entsorgt werden muss.

Zur Lösung dieses Problems schlägt die DE-A-195 27 205 vor, den zu vergasenden Klärschlamm als Filtermedium zu verwenden, d. h. das durch die Vergasung gewonnene Gas durch den zu verbrennenden Klärschlamm durchzuleiten. Dabei tritt jedoch im Filter an sich dasselbe Problem wie im Vergaser auf: Der Klärschlamm wird vom durchgeleiteten Gas erwärmt und zersetzt sich thermisch. Dabei wird Teer freigesetzt, der vom durchgeleiteten Gas, das eigentlich von Teer gereinigt werden sollte, ausgetragen wird. Die DE-A-34 23 620 offenbart ein vergleichbares Verfahren.

Der Erfindung liegt daher die Aufgabe zugrunde, ein Verfahren und eine Anlage der eingangs genannten Art vorzuschlagen, das/die das geschilderte Problem des im gewonnenen Gas enthaltenen Teers löst.

Diese Aufgabe wird erfindungsgemäß durch die Merkmale der Ansprüche 1 und 6 gelöst. Beim erfindungsgemäßen Verfahren mit den Merkmalen des Anspruchs 1 wird das durch die Vergasung von Klärschlamm gewonnene Gas gekühlt und dann durch einen Klärschlamm durchgeleitet, der anschließend der Vergasung zugeführt wird. Erst nachdem das Gas durch den noch zu vergasenden Klärschlamm durchgeleitet worden ist, wird es einer weiteren Verwendung, beispielsweise einer Strom- und/oder Wärmeerzeugung zugeführt. Beim Durchleiten des durch die Vergasung gewonnenen Gases durch den Klärschlamm setzt sich der im gewonnenen Gas enthaltene Teer im Klärschlamm ab, der Teer wird aus dem gewonnenen Gas herausgefiltert. Durch die Kühlung kondensiert der im gewonnenen Gas enthaltene Teer, so dass er sich bei der Durchleitung durch den Klärschlamm im Klärschlamm absetzt. Es wird dadurch vermieden, dass der Teer in Gasform zusammen mit dem durch die Vergasung gewonnenen Gas aus dem Klärschlamm austritt. Zusammen mit dem Klärschlamm wird der herausgefilterte Teer anschließend dem Vergaser zugeführt und vergast. Im Vergaser wird der Teer verbrannt und liefert dabei Wärme für die thermische Zersetzung des Klärschlamms und/oder der Teer wird ebenfalls in brennbares Gas umgewandelt. Beim erfindungsgemäßen Verfahren wird Teer, der in durch Vergasung gewonnenem Gas enthalten ist, der Vergasung wieder zugeführt. Die Erfindung hat den Vorteil, dass das durch die Vergasung gewonnene Gas kein oder allenfalls eine auf einen Bruchteil verringerte Menge an Teer enthält, so dass mit dem gewonnenen Gas beispielsweise ein Gasmotor betrieben werden kann. Weiterer Vorteil der Erfindung ist, dass kein Teer anfällt.

Vorzugsweise wird der Klärschlamm vor seiner Vergasung getrocknet, wobei in dem zu vergasenden Klärschlamm Feuchte enthalten sein kann. Der Klärschlamm wird der Vergasung in festem Zustand, beispielsweise als Granulat, zugeführt und nicht als Schlamm im eigentlichen Sinn. Trotzdem soll zur Erläuterung der Erfindung das Wort Klärschlamm beibehalten werden.

Die Kühlung des Gases vor der Einleitung in den Klärschlamm erfolgt vorzugsweise durch Zugabe von Wasser zum Gas, vorzugsweise durch Einspritzen des Wassers. Dies hat den Vorteil, dass eine hohe Kühlleistung erreicht wird. Zudem lässt sich durch die Zugabe von Wasser die Abkühlung des Gases einfach und genau so regeln, dass der Teer kondensiert und dass das Gas beim Austritt aus dem Klärschlamm eine Temperatur aufweist, bei der das zugegebene Wasser nicht kondensiert, also im Gas gelöst bleibt. Dadurch wird der Klärschlamm nicht vom durchgeleiteten Gas angefeuchtet, sondern im Gegenteil gibt der Klärschlamm Feuchtigkeit an das durchgeleitete Gas ab und wird getrocknet. Die genaue Regelung der Abkühlung des Gases durch die Zugabe von Wasser ist reaktionsschnell auch bei schwankender Gasmenge und schwankender Gastemperatur möglich.

Bei einer Ausgestaltung der Erfindung wird das Wasser, welches dem durch die Vergasung gewonnene Gas zu dessen Kühlung zugegeben worden ist, nach dem Austritt des Gases aus dem Klärschlamm abgeschieden. Das abgeschiedene Wasser wird gekühlt und dem durch die Vergasung gewonnenen Gas zugeführt, bevor das Gas in den Klärschlamm eingeleitet wird. Auf diese Weise wird ein Wasserkreislauf gebildet, es muss kein oder allenfalls eine verringerte Wassermenge zur Kühlung des Gases zugeführt werden. Die Führung des Wassers im Kreislauf hat außerdem den Vorteil, dass eine Verkalkung im Wasserkreislauf vermieden wird, da dem Wasserkreislauf kein Wasser und somit auch kein Kalk oder sonstige Härtebestandteile zugeführt werden. Im Wasserkreislauf kann sich dadurch höchstens die Kalkmenge absetzen, die in der einmalig zur Befüllung des Wasserkreislaufs erforderlichen Wassermenge enthalten war.

In bevorzugter Ausgestaltung der Erfindung wird das Wasser im Wasserkreislauf gefiltert. Dies hat zum einen den Vorteil, dass eine Kalkbelastung des Wasserkreislaufs praktisch auf Null herabgesetzt wird. Weiterer Vorteil der Filterung des abgeschiedenen Wasser ist, dass evtl. mit dem Wasser aus dem durch die Vergasung gewonnenen Gas abgeschiedene Schadstoffe ausgefiltert und dadurch nicht dem Gas wieder zugeführt werden.

Die erfindungsgemäße Anlage mit den Merkmalen des Anspruchs 6 weist außer dem Vergaser einen Klärschlammbehälter auf, aus dem der Vergaser mit dem Klärschlamm beschickt wird. Der Klärschlammbehälter kann beispielsweise aus einem Klärschlammsilo mit Klärschlamm beschickt werden. Vom Vergaser führt eine Gasleitung zum Klärschlammbehälter, durch die durch die Vergasung gewonnenes Gas dem Klärschlammbehälter zugeführt wird. Der Klärgasbehälter weist eine Gasführung auf, die das Gas durch im Klärschlammbehälter enthaltenen Klärschlamm durchleitet, bevor das Gas aus einem Gasauslaß des Klärschlammbehälters austritt. Die Gasführung kann beispielsweise dadurch erfolgen, dass die Gasleitung vom Vergaser und/oder eine Gasauslaßleitung in den im Klärschlammbehälter enthaltenen Klärschlamm eintauchen. Der Klärschlammbehälter bildet eine Art Filter, der im Klärschlammbehälter enthaltene Klärschlamm bildet ein Filtermittel, mit dem Teer, der in dem durch die Vergasung enthaltenen Gas enthalten ist, aus dem Gas ausgefiltert wird. Zusammen mit dem im Klärschlammbehälter enthaltenen Klärschlamm wird der ausgefilterte Teer dem Vergaser wieder zugeführt und dort verbrannt und/oder zu brennbarem Gas zersetzt.

Dem Klärschlammbehälter ist ein Gaskühler vorgeschaltet, in dem das Gas abgekühlt wird, so dass der im Gas enthaltene Teer kondensiert. Der kondensierte Teer wird bei der nachfolgenden Durchleitung des Gases durch den Klärschlamm ausgefiltert. Der Gaskühler kann als Teil des Klärschlammbehälters ausgebildet sein. Vorzugsweise weist der Gaskühler eine Wassereinspritzung zur Kühlung des gewonnenen Gases auf.

Bei einer Ausgestaltung der Erfindung ist ein Wasserabscheider vorgesehen, der an den Gasauslaß des Klärschlammbehälters angeschlossen ist. Mit dem Wasserabscheider wird Wasser aus dem Gas abgeschieden, das zuvor im Gaskühler dem Gas zugegeben worden ist. Das mit dem Wasserabscheider abgeschiedene Wasser wird dem Gaskühler wieder zugeführt. Der Wasserabscheider hat den Vorteil, dass er einen Wasserkreislauf zur Gaskühlung ermöglicht. Da das zur Kühlung dem Gas zugegebene Wasser vorzugsweise im Gas gelöst ist und nicht flüssig vorliegt, weist der Wasserabscheider insbesondere einen Kondensator auf, in dem das im Gas gelöste Wasser kondensiert und abgeschieden wird.

Bei einer Ausgestaltung der Erfindung ist ein Filter, insbesondere ein Aktivkohlefilter, im Wasserkreislauf vorgesehen, mit dem ggf. im Wasser enthaltene Schadstoffe ausgefiltert werden.

Die Erfindung eignet sich grundsätzlich auch zur Gewinnung von brennbarem Gas aus anderen vergasbarem Gut als Klärschlamm wie beispielsweise sonstige Biomasse.

Die Erfindung wird nachfolgend anhand eines in der Zeichnung dargestellten Ausführungsbeispiels näher erläutert. Die beiden Figuren zeigen ein Anlagenschema einer erfindungsgemäßen Anlage, wobei
- Figur 1: einen Gasgewinnungsteil mit Teerrückführung gemäß der Erfindung; und
- Figur 2: einen Wasserkreislauf der erfindungsgemäßen Anlage zeigt.

Die Figuren sind als vereinfachende, schematisierte Darstellungen zu verstehen.

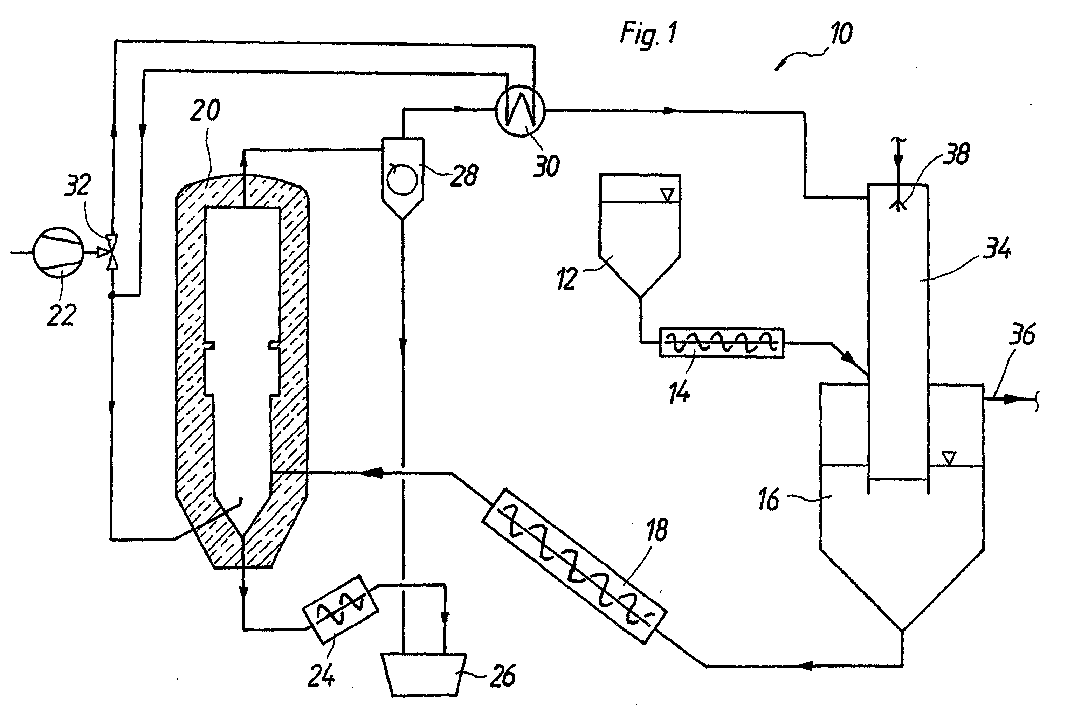

Die in Figur 1 dargestellte, erfindungsgemäße 19 Anlage dient zur Gewinnung von brennbarem Gas aus Klärschlamm. Der zu vergasende Klärschlamm wird als getrocknetes Klärschlamm-Granulat in einem Klärschlammvorlagesilo 12 gelagert. Aus dem Klärschlammvorlagesilo 12 wird das Klärschlamm-Granulat mit einem Schneckenförderer 14 einem Klärschlammbehälter 16 zugeführt. Mit einem weiteren Schneckenförderer 18 wird das Klärschlamm-Granulat aus dem Klärschlammbehälter 16 in einen Vergaser 20 gefördert, wo das Klärschlamm-Granulat vergast wird. Die Vergasung erfolgt in beispielsweise von der Holzvergasung her an sich bekannter Weise. Der Vergaser 20 ist als sog. Wirbelschichtvergaser aufgebaut, dem das Klärschlamm-Granulat in seinem unterem Bereich zugeführt wird. Die zur Vergasung notwendige Luft liefert ein Gebläse 22, das die Luft von unten in den Vergaser 20 einbläst und dadurch die Wirbelschicht erzeugt. Das Klärschlamm-Granulat wird unter Luftmangel thermisch zu einem brennbaren Gas (Gasgemisch) zersetzt.

Thermisch nicht zersetzbare Bestandteile (Asche) des Klärschlamm-Granulats fallen nach unten aus dem Vergaser 20 aus und werden mit einem Schneckenförderer 24 in einen Aschebunker 26 gefördert.

Das brennbare Gas tritt oben aus dem Vergaser 20 aus und wird zunächst einem Zyklonabscheider 28 zugeführt, in dem Staubteilchen abgeschieden werden. Die abgeschiedenen Staubteilchen werden ebenfalls in den Aschebunker 26 geleitet. Aus dem Zyklonabscheider 28 gelangt das durch die thermische Zersetzung gewonnene, brennbare Gas in einen Kühler (Rekuperator) 30, in dem es auf eine Temperatur von beispielsweise 770° C, gekühlt wird. Am Austritt aus dem Vergaser 20 hat das Gas eine Temperatur von beispielsweise ca. 1 100° C. Die Kühlung des brennbaren Gases im Rekuperator 30 erfolgt mit Luft, und zwar mit der Luft, die vom Gebläse 22 angesaugt und dem Vergaser 20 zur thermischen Zersetzung des Klärschlamm-Granulats zugeführt wird. Die dem Vergaser 20 zugeführte Luft wird auf diese Weise im Rekuperator 30 vorgewärmt. Mit einem Dreiwegehahn 32 kann die vom Gebläse 22 angesaugte Luft wahlweise zunächst durch den Rekuperator 30 durchgeleitet werden, bevor sie in den Vergaser 20 gelangt, oder die Luft kann unmittelbar vom Gebläse 22 dem Vergaser 20 zugeführt werden. Auch kann mit dem Dreiwegehahn 32 ein Teil der vom Gebläse 22 angesaugten Luft dem Rekuperator 30 und der übrige Teil der angesaugten Luft dem Vergaser 20 unmittelbar zugeführt werden. Dadurch kann das Verhältnis der durch den Rekuperator 30 dem Vergaser 20 zugeführten Luft zur dem Vergaser 20 unmittelbar zugeführten Luft und auf diese Weise die Kühlleistung des Rekuperators 30 und damit die Austrittstemperatur des im Vergaser 20 gewonnenen, brennbaren Gases am Austritt aus dem Rekuperator 30 eingestellt werden.

Nach dem Rekuperator 30 wird das durch die thermische Zersetzung gewonnene, brennbare Gas dem Klärschlammbehälter 16 zugeführt. Der Klärschlammbehälter 16 weist einen Gaskühler 34 auf, der im dargestellten und beschriebenen Ausführungsbeispiel rohrförmig und stehend ausgebildet ist. Der Gaskühler 34 taucht in das im Klärschlammbehälter 16 enthaltene Klärschlamm-Granulat ein, so dass das dem Gaskühler 34 im oberen Bereich zugeführte brennbare Gas zwangsweise durch das Klärschlamm-Granulat durchtreten muss, bevor es an einem Gasauslaß 36 aus dem Klärschlammbehälter 16 austritt.

Zur Kühlung des brennbaren Gases wird Wasser durch eine oder mehrere Wasserdüsen 38 in den Gaskühler 34 eingespritzt. Das eingespritzte Wasser kühlt das brennbare Gas und wird im Gas gelöst. Es wird soviel Wasser in den Gaskühler 34 eingespritzt, dass das Gas am Gasaustritt 36 aus dem Klärschlammbehälter 16 eine Temperatur von beispielsweise 120° hat, so dass das Wasser im Gas gelöst bleibt. Durch die Kühlung des brennbaren Gases im Gaskühler 34 kondensiert im gewonnen Gas enthaltener Teer und wird in dem im Klärschlammbehälter 16 enthaltenen Klärschlamm-Granulat, durch das das brennbare Gas durchgeleitet wird, ausgefiltert. Der Klärschlammbehälter 16 bildet somit einen Filter, das Klärschlamm-Granulat ein Filtermittel, mit dem im durch die thermische Zersetzung gewonnenen Gas enthaltener Teer aus dem Gas ausgefiltert wird.

Gemeinsam mit dem Klärschlamm-Granulat wird der ausgefilterte Teer dem Vergaser 20 zugeführt. Im Vergaser 20 wird der Teer verbrannt und erhöht dadurch einen Wirkungsgrad des Vergasers 20 und/oder der Teer wird thermisch zu brennbarem Gas zersetzt und tritt mit dem durch die thermische Zersetzung des Klärschlamm-Granulats gewonnenen brennbaren Gas aus dem Vergaser 20 aus. Die erfindungsgemäße Anlage 10 zur Gewinnung von brennbarem Gas aus Klärschlamm weist somit eine Teerrückführung auf, sie hat den Vorteil, dass der bei der thermischen Zersetzung des Klärschlamms anfallende Teer nicht abgeschieden und entsorgt werden muss und trotzdem das brennbare Gas nicht belastet.

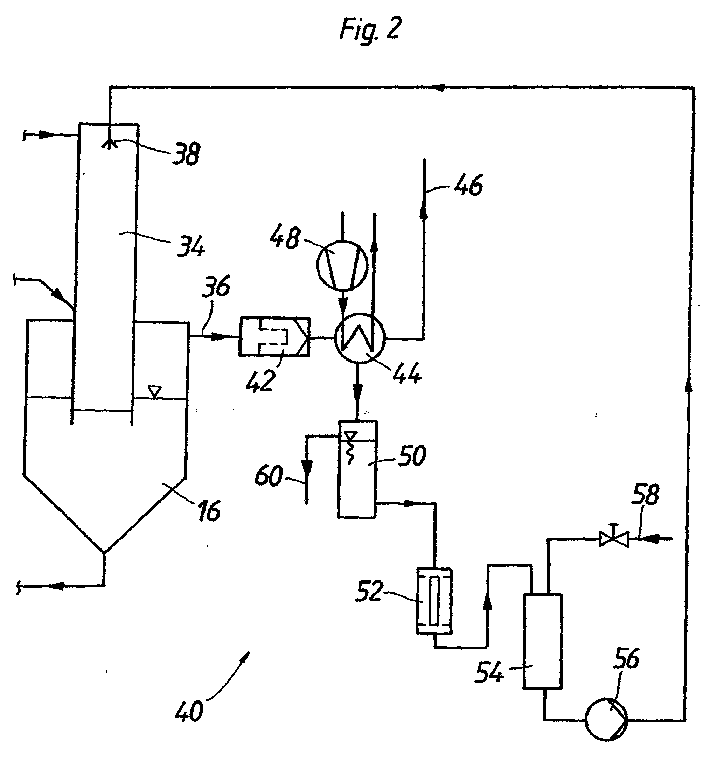

Zur Kühlung des brennbaren Gases im Gaskühler 34 weist die erfindungsgemäße Anlage 10 den in Figur 2 dargestellten Wasserkreislauf 40 auf. Das in den Gaskühler 34 eingespritzte Wasser wird im brennbaren Gas gelöst und tritt im brennbaren Gas gelöst am Gasaustritt 36 aus dem Klärschlammbehälter 16 aus, nachdem es durch das im Klärschlammbehälter 16 enthaltene Klärschlamm-Granulat durchgeleitet worden ist. Wie bereits erwähnt hat das brennbare Gas am Gasaustritt 36 aus dem Klärschlammbehälter 16 eine Temperatur von beispielsweise 120° C., also eine Temperatur, bei der das in den Gaskühler 34 eingespritzte Wasser im brennbaren Gas gelöst bleibt. Bei der Durchleitung des brennbaren Gases durch das im Klärschlammbehälter 16 enthaltene Klärschlamm-Granulat nimmt das brennbare Gas zusätzlich Wasser auf, das im Klärschlamm-Granulat als Feuchte enthalten ist. Das mit der thermischen Zersetzung gewonnene brennbare Gas trocknet das im Klärschlammbehälter 16 enthaltene Klärschlamm-Granulat beim Durchtritt.

Nach dem Austritt aus dem Klärschlammbehälter 16 wird das brennbare Gas durch ein Filter 42 und anschließend durch einen Kondensator 44 durchgeleitet, bevor es einer Verwertung (bei 46) zugeführt wird. Das brennbare Gas kann beispielsweise zur Stromerzeugung einem nicht dargestellten Gasmotor oder zur Wärmeerzeugung einem nicht dargestellten Gasbrenner zugeführt werden.

Eine Kühlung des Kondensators 44 erfolgt mit Luft, die dem Kondensator 44 von einem Gebläse 48 zugeführt wird. Das im brennbaren Gas gelöste Wasser kondensiert im Kondensator 44 und wird einem Kondensatsammelbehälter 50 zugeleitet. Der Kondensator 44 scheidet also das im brennbaren Gas gelöste Wasser ab, er bildet einen Wasserabscheider 44. Aus dem Kondensatsammelbehälter 50 wird das Wasser durch ein Aktivkohlefilter 52 durchgeleitet und einem Vorratsbehälter 50 zugeführt. Im Aktivkohlefilter 52 werden 52 werden Kalk und sonstige Härtebestandteile aus dem Wasser ausgefiltert um Kalkablagerungen im Wasserkreislauf 40 zu vermeiden. Aus dem Vorratsbehälter 54 wird das Wasser mit einer Pumpe 56 zur Einspritzdüse 38 des Gaskühlers 34 gefördert. Da das Wasser im Kreislauf geführt ist, braucht üblicherweise kein Wasser zugeführt werden. Ein Frischwasserzulauf 58 ist an sich nur zum Befüllen des Wasserkreislaufs 40 vorgesehen, ermöglicht allerdings auch ein Nachfüllen von Wasser bei Wasserverlust.

Da das brennbare Gas bei der Durchleitung durch das Klärschlamm-Granulat im Klärschlammbehälter 16 Wasser/Feuchtigkeit aus dem Klärschlamm-Granulat zusätzlich zu dem im Gaskühler 34 eingespritzten Wasser aufnimmt fällt im Wasserkreislauf 40 zusätzliches Wasser an, dass an einem Überlauf 60 abgeleitet wird, der im dargestellten Ausführungsbeispiel am Kondensatsammelbehälter 50 vorgesehen ist. Es muss deswegen dem Wasserkreislauf 40 üblicherweise kein Wasser zugeführt, sondern im Gegenteil es muss Wasser abgeleitet werden.

## Patentansprüche

1. Verfahren zur Gewinnung von brennbarem Gas aus insbesondere Klärschlamm, wobei der Klärschlamm vergast wird, und das durch die Vergasung gewonnene Gas durch noch zu vergasenden Klärschlamm durchgeleitet wird, **dadurch gekennzeichnet, dass** das durch die Vergasung gewonnene Gas gekühlt wird, bevor es durch den noch zu vergasenden Klärschlamm durchgeleitet wird.

2. Verfahren nach Anspruch 1, **dadurch gekennzeichnet, dass** der Klärschlamm vor seiner Vergasung getrocknet wird.

3. Verfahren nach Anspruch 1 **dadurch gekennzeichnet, dass** das Gas durch Zugabe von Wasser gekühlt wird.

4. Verfahren nach Anspruch 3 **dadurch gekennzeichnet, dass** Wasser, welches in dem durch die Vergasung gewonnenen Gas enthalten ist, nachdem das Gas durch den noch zu vergasenden Klärschlamm durchgeleitet worden ist, abgeschieden, gekühlt und dem durch die Vergasung gewonnenen Gas zur Kühlung zugeführt wird, bevor das Gas durch den Klärschlamm durchgeleitet wird.

5. Verfahren nach Anspruch 4 **dadurch gekennzeichnet, dass** das abgeschiedene Wasser gefiltert wird.

6. Anlage zur Gewinnung von brennbarem Gas aus insbesondere Klärschlamm, mit einem Vergaser zur Vergasung des Klärschlamms, mit einem Klärschlammbehälter für den Klärschlamm, aus dem der Vergaser mit Klärschlamm beschickt wird, mit einer Gasleitung, die vom Vergaser zu dem Klärschlammbehälter führt, wobei der Klärschlammbehälter eine Gasführung aufweist, die im Vergaser gewonnenes Gas durch im Klärschlammbehälter enthaltenen Klärschlamm durchleitet, bevor das Gas aus dem Klärschlammbehälter austritt, **dadurch gekennzeichnet, dass** die Anlage (10) einen Gaskühler (34) aufweist, der dem Vergaser (20) nach- und dem Klärschlammbehälter (16) vorgeschaltet ist.

7. Anlage nach Anspruch 6, **dadurch gekennzeichnet, dass** der Gaskühler (34) eine Wassereinspritzung (38) aufweist.

8. Anlage nach Anspruch 7, **dadurch gekennzeichnet, dass** an einen Gasauslaß (36) des Klärschlammbehälters (16) ein Wasserabscheider (44) angeschlossen ist, und dass mit dem Wasserabscheider (44) abgeschiedenes Wasser der Wassereinspritzung (38) des Gaskühlers (34) zugeführt wird.

9. Anlage nach Anspruch 8, **dadurch gekennzeichnet, dass** an den Wasserabscheider (44) ein Filter (52) angeschlossen ist, das mit dem Wasserabscheider (44) abgeschiedenes Wasser filtert.

## Claims

1. Method of recovering combustible gas from, more especially, clarified sludge, the clarified sludge being gasified, and the gas, recovered by the gasification, being conducted through clarified sludge still to be gasified, **characterised in that** the gas, recovered by the gasification, is cooled before it is conducted through the clarified sludge still to be gasified.

2. Method according to claim 1, **characterised in that** the clarified sludge is dried prior to being gasified.

3. Method according to claim 1, **characterised in that** the gas is cooled by the addition of water.

4. Method according to claim 3, **characterised in that** water, which is contained in the gas recovered by the gasification, after the gas has been conducted through the clarified sludge still to be gasified, is separated, cooled and supplied to the gas, recovered by the gasification, for cooling before the gas is conducted through the clarified sludge.

5. Method according to claim 4, **characterised in that** the separated water is filtered.

6. Apparatus for recovering combustible gas from, more especially, clarified sludge, said apparatus having a gasifier for gasifying the clarified sludge, a clarified sludge container for the clarified sludge, from which the gasifier is charged with clarified sludge, and a gas line which extends from the gasifier to the clarified sludge container, the clarified sludge container having a gas conduit which conducts gas, recovered in the gasifier, through clarified sludge contained in the clarified sludge container, before the gas emerges from the clarified sludge container, **characterised in that** the apparatus (10) has a gas cooler (34) which is connected downstream, of the gasifier (20) and upstream of the clarified sludge container (16).

7. Apparatus according to claim 6, **characterised in that** the gas cooler (34) has a water spray system (38).

8. Apparatus according to claim 7, **characterised in that** a water separator (44) communicates with a gas outlet (36) of the clarified sludge container (16), and **in that** water, which has been separated by the water separator (44), is supplied to the water spray system (38) of the gas cooler (34).

9. Apparatus according to claim 8, **characterised in that** a filter (52), which filters water which has been separated by the water separator (44), communicates with the water separator (44).

## Revendications

1. Procédé pour obtenir du gaz combustible notamment à partir de boues d'épuration, les boues d'épuration étant gazéifiées et le gaz obtenu par la gazéification étant dirigé à travers des boues d'épuration non encore gazéifiées, **caractérisé en ce que** le gaz issu de la gazéification est refroidi avant d'être dirigé à travers les boues d'épuration non encore gazéifiées.

2. Procédé selon la revendication 1, **caractérisé en ce que** les boues d'épuration sont asséchées avant d'être gazéifiées.

3. Procédé selon la revendication 1, **caractérisé en ce que** le gaz est refroidi par adjonction d'eau.

4. Procédé selon la revendication 3, **caractérisé en ce que** de l'eau contenue dans le gaz obtenu par gazéification en est extraite après que le gaz été dirigé à travers les boues d'épuration non encore gazéifiées, puis elle est refroidie et amenée au gaz obtenu par la gazéification pour le refroidir, avant que le gaz n'est pas dirigé à travers les boues d'épuration.

5. Procédé selon la revendication 4, **caractérisé en ce que** l'eau extraite est filtrée.

6. Installation pour obtenir du gaz combustible notamment à partir de boues d'épuration, comprenant un gazéificateur pour gazéifier les boues d'épuration, un réservoir pour les boues d'épuration qui alimente le gazéificateur en boues d'épuration, comprenant également une conduite de gaz allant du gazéificateur au réservoir des boues d'épuration, sachant que le réservoir des boues d'épuration est doté d'un circuit de gaz qui fait traverser au gaz obtenu dans le gazéificateur les boues d'épuration contenues dans le réservoir des boues d'épuration avant que le gaz ne sorte du réservoir des boues d'épuration, **caractérisée en ce que** l'installation (10) présente un dispositif de refroidissement du gaz (34) qui est placé en aval du gazéificateur (20) et en amont du réservoir des boues d'épuration (16).

7. Installation selon la revendication 6, **caractérisée en ce que** le dispositif pour refroidir le gaz (34) comporte une injection d'eau (38).

8. Installation selon la revendication 7, **caractérisée en ce qu'**un séparateur d'eau (44) est raccordé à une sortie de gaz (36) du réservoir des boues d'épuration (16), et **en ce que** l'eau extraite à l'aide du séparateur d'eau (4, 4) est dirigée vers l'injection d'eau (38) du dispositif de refroidissement du gaz (34).

9. Installation selon la revendication 8, **caractérisée en ce qu'**un filtre (52) est raccordé au séparateur d'eau (44), qui filtre l'eau extraite à l'aide du séparateur d'eau (44).
